# EUROPÄISCHE PATENTSCHRIFT

(11) **EP 0 752 528 B1**
(45) Veröffentlichungstag und Bekanntmachung des Hinweises auf die Patenterteilung: **22.03.2000**
(21) Anmeldenummer: 96109277.2
(22) Anmeldetag: 10.06.1996
(51) Int. Cl.: F02M 25/07, F16K 31/06

(54) **Abgasrückführventil**
Exhaust gas recirculation valve
Soupape de recirculation de gaz d'échappement

(30) Priorität: 06.07.1995 DE 19524671
(43) Veröffentlichungstag der Anmeldung: 08.01.1997
(73) Patentinhaber: Ranco Incorporated of Delaware, Wilmington, Delaware 19801-1612 (US)
(72) Erfinder: Gehrke, Karsten, 89155 Erbach (DE); Klipfel, Bernhard, 76187 Karlsruhe (DE); Schlick, Karl-Heinz, 68809 Neulussheim (DE)
(74) Vertreter: Görg, Klaus, Dipl.-Ing.

(56) Entgegenhaltungen:
- CH-A- 488 956
- FR-A- 607 751
- FR-A- 869 302

## Beschreibung

Die vorliegende Erfindung betrifft ein Ventil zur Abgasrückführung, gemäß Anspruch 1.

Ein ähnliches Ventil ist aus der FR-A-869 302 bekannt.

Aus der CH-A-488 956 ist ein elektromagnetisch gesteuertes Ventil mit einem hülsenförmigen Ventilkörper bekannt. Dieser Ventilkörper bildet einen ringförmigen Magnetanker mit einer diesen umgebenden Spule. Dieses Ventil dient der Steuerung von Saugluft.

Aus der FR-A-607 751 ist ein Ventil zur Gemischregelung bekannt, bei dem eine Hülse als Ventilkörper mittels eines Exzenters gesteuert wird.

Abgasrückführventile (AGR-Ventile) werden verwendet, um der Zuluft von Verbrennungsmotoren eine dosierte Menge an Abgas wieder zuzuführen. Diese Beimischung von Abgasen in der Zuluft bewirkt eine bessere Verbrennung des zugeführten Kraftstoffs und reduziert somit Schadstoffe im Abgas des Motors. Abgasrückführventile werden bei Verbrennungsmotoren nach dem Otto- und dem Dieselprinzip angewendet, wobei die Durchflußmengen sehr unterschiedlich sein können. Die Ventile nutzen dabei das Druckgefälle zwischen Abgas und Zuluft aus. Beim bisherigen Stand der Technik werden bei Abgasrückführventilen hauptsächlich Tellerventile verwendet, die von Druckdosen oder Elektromagneten und Federn angetrieben werden. Die Vorteile dieses konventionellen Ventiltyps sind darin zu sehen, daß er relativ temperatur- und verschmutzungsunempfindlich ist und sich bei Ausfall des Antriebes selbst schließt (fail save). Diese Tellerventile haben bei Ottomotoren befriedigende Resultate gezeigt, stoßen aber bei der Verwendung in Dieselmotoren an ihre Grenzen. Dies liegt insbesondere daran, daß bei Dieselmotoren aufgrund der immer höheren Abgasrückführraten immer größere Durchflußmengen gefordert werden.

Ein weiteres Problem ist die Sensibilität des Tellerventils. Da dieses von der Luftströmung zugedrückt werden kann, ist insbesondere bei geringen Öffnungsspalten und Druckschwankungen eine kontrollierte Ventilsteuerung problematisch. So müssen besondere Anstrengungen zur Erhöhung der Kraft des Antriebs bei geringem Ventilhub unternommen werden, um ein Flattern des Ventils zu verhindern. Des weiteren ist es schwierig, mit den bekannten Tellerventilen bestimmte Kennlinien zu realisieren, insbesondere solche, bei denen geringer Durchfluß bei geringem Öffnungsspalt gefordert wird. Als weitere Forderung kommen kurze Schließzeiten hinzu. Diese können durch geringe Hübe des Ventiltellers verwirklicht werden. Dabei nimmt aber, wie oben beschrieben, die Empfindlichkeit der Ventiltellersteuerung bei geringen Öffnungsspalten zu. Außerdem benötigen die oben beschriebenen Tellerventile relativ große und schwere Zugmagnete zur Betätigung des Ventils, was Platz- und Schwingungsprobleme hervorrufen kann.

Aufgabe der vorliegenden Erfindung ist es, ein Ventil zur Verfügung zu stellen, das bei geringen Ventilhüben und damit bei kurzen Schließzeiten große Durchflußmengen erlaubt, das dabei ein stabiles, nicht zu Schwingungen neigendes Regelverhalten zeigt, und mit dem sich gewünschte Kennlinien einfach realisieren lassen.

Die Lösung dieser Aufgabe erfolgt durch ein Ventil mit den Merkmalen des Anspruchs 1. Vorteile eines derartigen Ventils, das als Ventilkörper eine axial verschiebbare Hülse aufweist, die gegen mindestens einen Ventilsitz anlegbar ist und dessen Einlaß zumindest abschnittsweise an der Außenseite der Hülse im Bereich des Ventilsitzes mündet, sind zum einen die Unempfindlichkeit gegen Schließen durch den Strömungsdruck, da das Ventil senkrecht zur Richtung der zu beeinflussenden Strömung betätigt wird. Zum anderen sind kurze Schließzeiten realisierbar, da durch geringe Hübe bereits große Querschnittsfreigaben erfolgen. Da hierdurch eine geringere Antriebskraft des Stellorgans erforderlich ist, liegt das Gesamtgewicht der Hülse und des Antriebs unter dem Gewicht von Tellerventilen. Da die Ladeluft in der Regel gefiltert und das restliche Ventil nach außen komplett abgekapselt ist (keine bewegte Durchführungen), gibt es keine Probleme mit Korrosion und Verschmutzung am Anker. Außerdem ist das Ventil unempfindlicher gegen Vibrationen, da die Spule näher am Flansch angeordnet und über das stabile Ansaugrohr befestigt werden kann.

Der Durchströmungskanal, der die Verbindung zwischen einem weiteren Einlaß und dem Auslaß herstellt, kann bei einem Verbrennungsmotor der Ansaugkanal sein. Vorteil bei der Plazierung der Hülse in einem derartigen Kanal ist es, daß keine Platzprobleme unter der Motorhaube entstehen, da das Ventil nur Platz für eine Rohrverbreiterung im Ansaugrohr benötigt. Dies bedeutet, daß das Ventil einfach in den Ansaugkanal zwischen zwei Flanschen eingepaßt werden kann. Schließlich wird das Ventil aufgrund der inneren Durchströmung der Hülse mit der kühleren Zuluft des Motors von innen gekühlt, was das Ventil relativ temperaturunempfindlich macht.

Bei einer weiteren Ausführungsform mündet der Einlaß, insbesondere für Abgas in einen Zuströmkanal, der die Hülse zumindest teilweise umgibt, wobei die Kontur des Zuströmkanals der Kontur der Hülse folgt. Dies ist vorteilhaft, da die Hülse mit dem Ventilsitz dichten soll, der in der Regel der Kontur des Zuströmkanals entspricht. Ein großer Vorteil ist dabei, daß keine zusätzlichen Führungen erforderlich sind, da die Hülse an der Kontur anliegt und an ihr gleitet. Eine vorteilhafte Weiterbildung dieses Zuströmungskanals kann ein Zuströmungskanal sein, der die Hülse ringförmig umgibt, wobei dieser exzentrisch zur Mittelachse des Durchströmungskanals oder konzentrisch zur Mittelachse des Durchströmungskanals angeordnet sein kann. Vorteil dieser Ausführung ist die Vergrößerung des Zuströmungsquerschnitts. Dadurch wird wiederum der erforderliche Ventilhub für eine gewünschte Durchflußmenge verringert.

Nach einer weiteren Ausbildung der Erfindung weist die Hülse mindestens einen ringförmigen Magnetanker auf, der zusammen mit der Rückstellfeder den Stellantrieb bildet. Dieser Magnetanker kann an die Hülse angeformt oder mit dieser verbunden sein. Durch die Verbindung von Hülse und Magnetanker wird der zur Verfügung stehende Platz optimal ausgenutzt.

Da die Spulenwicklung des Zugmagneten im Durchströmungskanal angeordnet ist, ist eine kurze Länge des Wicklungsdrahtes realisierbar. Wenn nämlich der Durchmesser des Durchströmungskanals relativ groß wird, d. h. größer als 35 mm oder sogar 50 mm, so wird aufgrund des entsprechend großen Durchmessers der Spulenwicklung die Länge des Wicklungsdrahtes je Windung relativ groß, da die Betätigungskraft proportional der Ampère-Windungszahl ist. Der Elektromagnet erzeugt mehr Kraft, da die Spule durch die Ladeluft von innen gekühlt wird und die Spule auf einen höheren Widerstand bei Raumtemperatur ausgelegt sein kann. Durch die kürzere Länge des Wicklungsdrahtes kann Kupferdraht und damit Gewicht eingespart werden.

Außerdem kann die Spulenwicklung von einem strömungsgünstigen Gehäuse umgeben sein.

Erfindungsgemäß kann es vorteilhaft sein, einen Positionssensor zur Erfassung des Ventilhubes vorzusehen, welcher z.B. als induktiver Geber ausgelegt sein kann. Durch einen derartigen Positionssensor läßt sich das Ventil sehr genau regeln. Durch die Verwendung eines induktiven Gebers erfolgt die Erfassung der Position berührungslos, was eine verschleißfreie Messung bewirkt.

Bei einer vorteilhaften Ausführung des Ventils ist in der Mitte des Durchströmungskanals eine Rückstellfeder für die Hülse angeordnet, die vorzugsweise auf einer Führung angeordnet ist, die sternförmig über Stege mit der Mantelfläche der Hülse verbunden ist. Eine Weiterbildung dieser Ausführungsform ist die Anordnung einer Rückstellfeder für die Hülse am Hülsenumfang, wodurch der Querschnitt des Durchströmungskanals maximiert ist. Der Ventilhub hat bei beiden Ausführungen eine geringe Hysterese, da keine Dichtung gegen Korrosion zwischen Zugmagnet und Ventilstößel angebracht werden muß, wie dies bei Tellerventilen der Fall ist.

Des weiteren kann es vorteilhaft sein, die Hülse und deren Stellvorrichtung als eine Baugruppe auszubilden. Dadurch werden Teile gespart und das ganze Ventil wird kostengünstig in der Herstellung. Es hat außerdem nur eine Montagerichtung, was die vollautomatische Montage erleichtert und wiederum Kosten senkt. Außerdem ist das Ventil dadurch einfach zu demontieren, was leichteres Recycling ermöglicht.

Zur Strömungsbeeinflussung können Schürzen an der Hülse angebracht sein. Dadurch lassen sich einfach gewünschte Kennlinien realisieren.

Schließlich kann die Steuerung des Ventils mittels pulsbreitenmodulierter Spannung erfolgen. Die Anschlüsse dafür können leicht am Ventilgehäuse angebracht werden.

Nachfolgend werden rein beispielhaft vorteilhafte Ausführungsformen der Erfindung anhand der beigefügten Zeichnungen beschrieben. Es zeigen:
- Fig. 1: einen Längsschnitt durch eine erste Ausführungsform eines Abgasrückführventils;
- Fig. 2: einen Längsschnitt durch eine zweite Ausführungsform eines Abgasrückführventils;
- Fig. 3: einen Schnitt entlang der Linie III-III in Fig. 2;
- Fig. 4: eine Ansicht des Abgasrückführventils aus Pfeilrichtung X in Fig. 2; und
- Fig. 5: einen Längsschnitt gemäß Fig. 1 durch eine andere Ausführungsform.

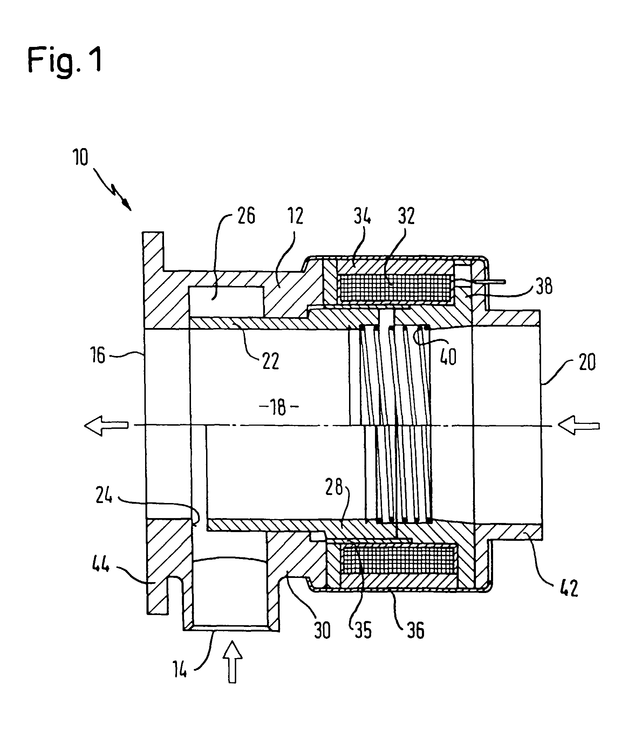

Fig. 1 zeigt eine erste Ausführungsform eines erfindungsgemäßen Ventils, wobei das Ventil zur Abgasrückführung dient. Das in Fig. 1 dargestellte Ventil 10 weist ein Gehäuse 12 auf, in dem ein Einlaß 14 und ein Auslaß 16 ausgebildet sind. Hierbei ist in dem Ventil 10 ein Durchströmungskanal 18 ausgebildet, der den Auslaß 16 mit einem weiteren Einlaß 20 verbindet.

Als Ventilkörper dient eine in Axialrichtung verschiebbare Hülse 22, die gegen einen Sitz 24 des Ventils anlegbar ist. Wie in Fig. 1 gut zu erkennen ist, verbindet ein Zuströmungskanal 26 den Einlaß 14 mit dem Durchströmungskanal 18, wobei beide Kanäle senkrecht zueinander verlaufen. Da der Einlaß 14 über den Zuströmungskanal 26 an der Außenseite der Hülse 22 im Bereich des Ventilsitzes 24 mündet, läßt sich durch axiales Verschieben der Hülse eine Verbindung zwischen dem Einlaß 14 und dem Durchströmungskanal 22 herstellen oder unterbrechen.

Der in Fig. 1 dargestellte Zuströmungskanal 26 umgibt die Hülse 22 ringförmig und folgt dabei der Außenkontur der Hülse. Hier ist der Zuströmungskanal 26 konzentrisch zur Mittelachse des Durchströmungskanals 18 angeordnet.

Die aus Metall ausgebildete Hülse 22 ist an ihrem in Fig. 1 rechten Ende mit einer ringförmigen Erweiterung versehen, die einen Magnetanker 28 bildet. In dem Ventilgehäuse 30 ist dabei eine ebenfalls ringförmige Spulenwicklung 32 angeordnet, die von einem Polring 34 umgeben ist. Zwischen dem Magnetanker 28 der Hülse 22 und der Spule 32 ist ferner eine Gleitbuchse 35 angeordnet. Die Anordnung von Spule 32 und Polring 34 ist dabei von einem Magnetgehäuse 36 umgeben, welches diese Anordnung nach außen abschirmt.

Um ein dichtendes Anliegen der Hülse 22 an dem Ventilsitz 24 zu erreichen, ist an einer ringförmigen vorderen Polplatte 38 des Stellmagneten eine ringförmige Ausnehmung vorgesehen, in der eine Rückstellfeder 40 angeordnet ist, welche die Hülse 22 gegen den Ventilsitz 24 drückt. Hierbei ist die Rückstellfeder 40 in einer Ringnut gelagert, die am Innenumfang des Magnetankers 28 der Hülse 22 ausgebildet ist. Somit befindet sich die Rückstellfeder am Innenumfang der Hülse 22, verengt jedoch den Durchströmungsquerschnitt des Durchströmungskanals 18 nicht.

Das in Fig. 1 dargestellte Abgasrückführungsventil 10 wird über einen Zuluftflansch 42 an einem Zuluftkanal und über einen weiteren Flansch 44 an dem Zuluftkrümmer des Verbrennungsmotors befestigt. Durch Betätigen des Stellmagneten wird der Magnetanker 28 und damit auch die Hülse 22 in Fig. 1 nach rechts bewegt, wodurch sich im Bereich des Zuströmungskanals 26 ein Ringspalt öffnet. In Fig. 1 ist in der oberen Hälfte der geschlossene und in der unteren Hälfte der offene Zustand des Ventils dargestellt.

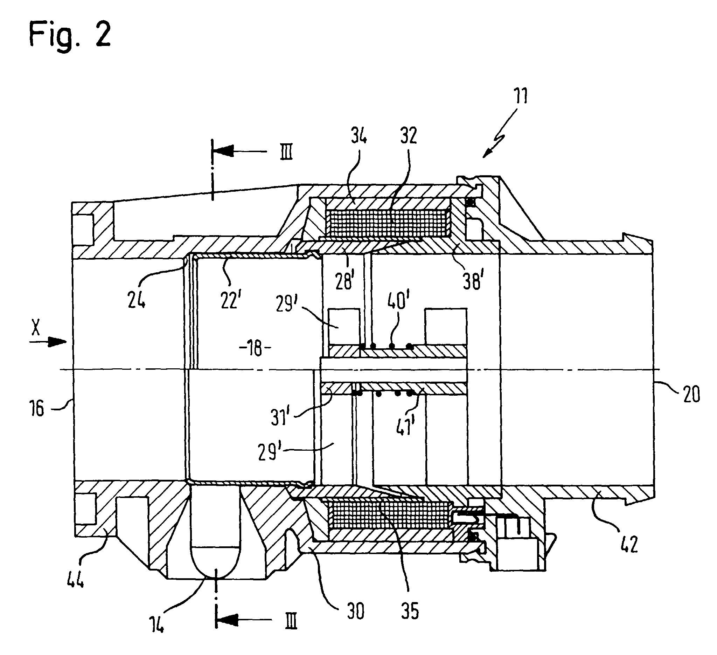

Fig. 2 zeigt eine weitere Ausführungsform eines Abgasrückführungsventiles, wobei für gleiche Teile gleiche Bezugszeichen verwendet werden. Das in Fig. 2 dargestellte Ventil 11 entspricht in seinem grundsätzlichen Aufbau dem in Fig. 1 dargestellten Ventil 10, weist jedoch eine Hülse 22' auf, an deren Außenumfang in Fig. 2 rechts ein Magnetanker 28' angebracht ist. Der Magnetanker 28', der auf einem konischen Sitz der Polplatte 38' aufsitzt, wird über eine Rückstellfeder 40' in die in Fig. 2 unten dargestellte Lage gedrückt. Die Rückstellfeder 40' ist auf einer Führung 41' angeordnet, die sternförmig über drei Stege mit der vorderen Polplatte 38' verbunden ist.

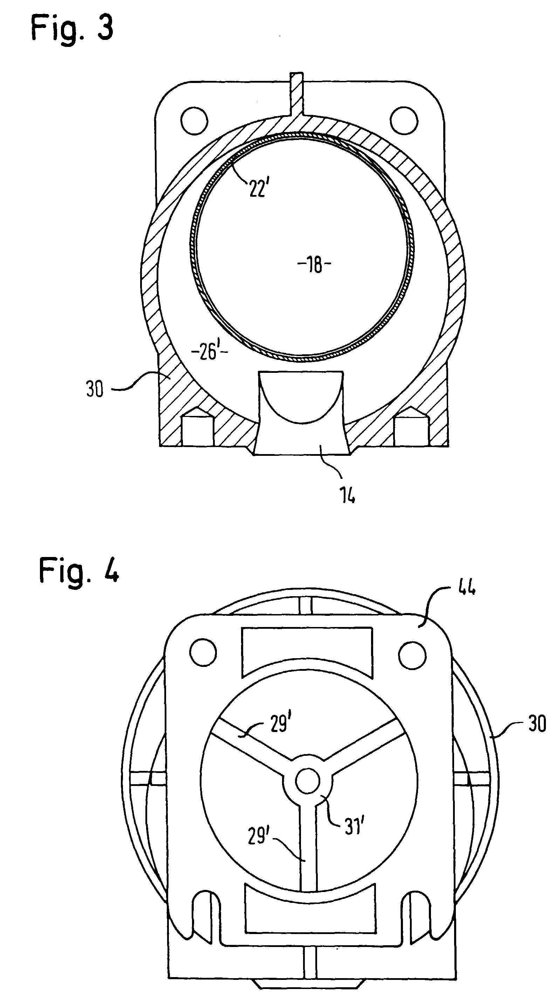

Der Anker 28' ist dabei ebenfalls über drei sternförmig angeordnete Stege 29' mit einem Rohrsegment 31' verbunden, das die Federkraft der Feder 40' aufnimmt (vgl. Fig. 2 und 4).

Im Gegensatz zu dem in Fig. 1 dargestellten Ventil 10 ist das in Fig. 2 dargestellte Ventil 11 nicht mit einem Magnetgehäuse 36 versehen, sondern das Gehäuse 30 ist außen über die Magnetanordnung geführt. Der Zuluftflansch 42 des Magnetventils 11 ist über eine Dichtung mit dem Gehäuse 30 verbunden.

In gleicher Weise wie bei dem in Fig. 1 dargestellten Ventil 10 wird bei dem in Fig. 2 dargestellten Ventil 11 durch Betätigen des Stellmagneten die Hülse 22' nach rechts verschoben, wodurch eine Verbindung zwischen dem Zuströmungskanal 26' und dem Durchströmungskanal 18 hergestellt wird.

Der in Fig. 3 dargestellte Zuströmungskanal 26' umgibt die Hülse 22' ringförmig. In diesem Fall ist die Mittelachse des Zuströmungskanals 26' exzentrisch zur Mittelachse der Hülse 22' angeordnet.

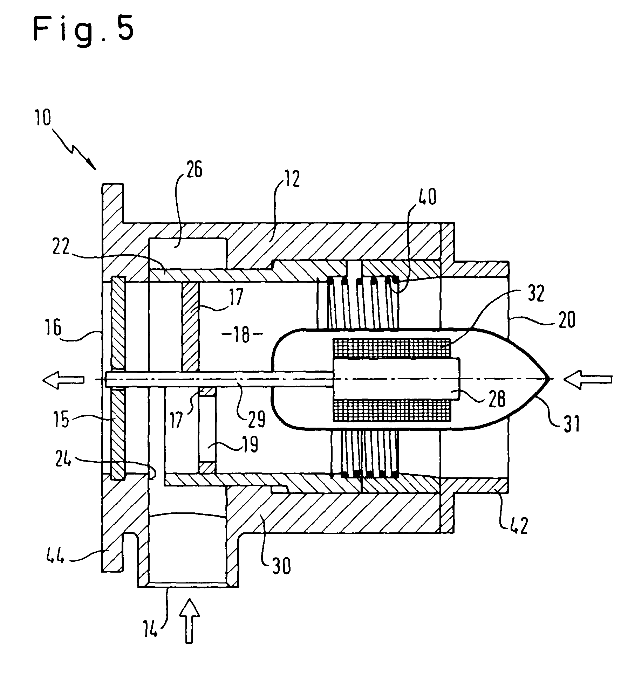

In Fig. 5 ist ein Ausführungsbeispiel dargestellt, bei dem die Spulenwicklung 28 im Durchströmungskanal 18 angeordnet und von einem strömungsgünstigen Gehäuse 31 umgeben ist, das auch die Spulenwicklung hält. Der Magnetanker 28 ist mit einer Antriebsstange 29 verbunden, die wiederum am dem Magnetanker 28 entgegengesetzten Ende in einer Führungsplatte 15 geführt und über ein Verbindungsteil 17 mit der Hülse 22 verbunden ist. Vorzugsweise können für eine bessere Führung auch zwei Verbindungsteile 17 vorgesehen sein. Im Verbindungsteil 17 ist mindestens eine Öffnung 19 vorgesehen. Die Rückstellfeder 40 befindet sich, wenn auch nicht so dargestellt, bevorzugt auf der Antriebsstange entweder außerhalb oder bevorzugt innerhalb des Gehäuses 31.

## Patentansprüche

1. Ventil zur Abgasrückführung mit
- einem Einlaß (14),
- einem Auslaß (16),
- mindestens einem Ventilsitz (24),
- einem Ventilkörper, der eine axial verschiebbare Hülse (22, 22') ist, die gegen den Ventilsitz (24) anlegbar ist, und an der mindestens ein Magnetanker (28) eines Stellmagneten vorgesehen ist, und
- einer Stelleinrichtung zur Bewegung des Ventilkörpers,
- wobei der Einlaß (14) zumindest abschnittsweise an der Außenseite der Hülse (22, 22') im Bereich des Ventilsitzes (24) mündet, und wobei
und wobei
sich die verschiebbare Hülse (22, 22') in einem Durchströmungskanal (18) bewegt, der die Verbindung zwischen einem weiteren Einlaß (20) und dem Auslaß (16) herstellt, und daß in dem Durchströmungskanal (18) eine Spulenwicklung (32) angeordnet ist.

2. Ventil nach Anspruch 1,
**dadurch gekennzeichnet, daß**
der Einlaß (14) in einen Zuströmungskanal (26, 26') mündet, der die Hülse (22, 22') zumindest teilweise umgibt, wobei die Kontur des Zuströmungskanales (26, 26') der Kontur der Hülse (22) folgt.

3. Ventil nach Anspruch 2,
**dadurch gekennzeichnet, daß**
der Zuströmungskanal (26, 26') die Hülse (22, 22') ringförmig umgibt.

4. Ventil nach Anspruch 2 oder 3,
**dadurch gekennzeichnet, daß**
der Zuströmungskanal (26') exzentrisch zur Mittelachse des Durchströmungskanals (18) angeordnet ist.

5. Ventil nach Anspruch 2 oder 3,
**dadurch gekennzeichnet, daß**
der Zuströmungskanal (26) konzentrisch zur Mittelachse des Durchströmungskanals (18) angeordnet ist.

6. Ventil nach zumindest einem der vorhergehenden Ansprüche,
**dadurch gekennzeichnet, daß**
der Magnetanker (28) an die Hülse (22) angeformt ist.

7. Ventil nach zumindest einem der vorhergehenden Ansprüche,
**dadurch gekennzeichnet, daß**
im Durchströmungskanal (18) ein strömungsformangepaßtes Gehäuse angeordnet ist, in dem sich Magnetanker (28) und Spulenwicklung (32) befinden.

8. Ventil nach einem der vorhergehenden Ansprüche,
**dadurch gekennzeichnet, daß**
ein Positionssensor zur Erfassung des Ventilhubes vorgesehen ist.

9. Ventil nach Anspruch 8,
**dadurch gekennzeichnet, daß**
der Positionssensor ein induktiver Geber ist.

10. Ventil nach einem der vorhergehenden Ansprüche 1 bis 9,
**dadurch gekennzeichnet, daß**
in der Mitte des Durchströmungskanales (18) eine Rückstellfeder (40') für die Hülse (22') angeordnet ist, die vorzugsweise auf einer Führung (41') angeordnet ist, die sternförmig über Stege (29') mit einem gehäusefesten Teil verbunden ist.

11. Ventil nach einem der Ansprüche 1 bis 9,
**dadurch gekennzeichnet, daß**
eine Rückstellfeder (40) für die Hülse (22) am Hülsenumfang angeordnet ist.

12. Ventil nach einem der vorhergehenden Ansprüche,
**dadurch gekennzeichnet, daß**
die Hülse und deren Stellvorrichtung als eine Baugruppe ausgebildet sind.

13. Ventil nach einem der vorhergehenden Ansprüche,
**dadurch gekennzeichnet, daß**
zur Strömungsbeeinflussung Schürzen an der Hülse angebracht sind.

14. Ventil nach einem der vorhergehenden Ansprüche,
**dadurch gekennzeichnet, daß**
die Steuerung des Ventils mittels einer pulsbreitenmodulierten Spannung erfolgt.

15. Verwendung eines Ventils nach einem der Ansprüche 1 bis 14 zur Mengenregulierung der rückgeführten Abgasmenge eines Verbrennungsmotors, die aus einem Zuströmungskanal in einen Durchströmungskanal strömt, wobei durch axiales Verschieben der von Zuluft durchströmten Hülse mindestens ein Ringspalt zur Zuführung von Abgasen in den Durchströmungskanal geöffnet oder geschlossen wird.

## Claims

1. Valve for exhaust gas recirculation having
- an inlet (14),
- an outlet (16),
- at least one valve seat (24),
- a valve body which is an axially displaceable sleeve (22, 22') which can be placed against the valve seat (24) and on which at least one armature (28) of an operating magnet is provided, and
- an actuating device for moving the valve body,
- wherein the inlet (14) runs in, at least in sections, on the outside of the sleeve (22, 22') in the region of the valve seat (24)
and wherein
the displaceable sleeve (22, 22') moves in a throughflow channel which establishes the connection between a further inlet (20) and the outlet (16), and a coil winding (32) is arranged in the flow channel (18).

2. Valve according to Claim 1, characterised in that the inlet (14) runs into an inflow channel (26, 26') which at least in part surrounds the sleeve (22, 22'), the contour of the inflow channel (26, 26') following the contour of the sleeve (22) .

3. Valve according to Claim 2, characterised in that the inflow channel (26, 26') surrounds the sleeve (22, 22') in annular manner.

4. Valve according to Claim 2 or 3, characterised in that the inflow channel (26') is arranged eccentrically with respect to the central axis of the throughflow channel (18).

5. Valve according to Claim 2 or 3, characterised in that the inflow channel (26) is arranged concentrically with respect to the central axis of the throughflow channel (18).

6. Valve according to at least one of the preceding claims, characterised in that the armature (28) is formed onto the sleeve (22).

7. Valve according to at least one of the preceding claims, characterised in that arranged in the throughflow channel (18) is a housing adapted to the shape of the flow in which the armature (28) and coil winding (32) are located.

8. Valve according to one of the preceding claims, characterised in that a position sensor for detecting the valve stroke is provided.

9. Valve according to Claim 8, characterised in that the position sensor is an inductive pick-up

10. Valve according to one of the preceding Claims 1 to 9, characterised in that in the centre of the throughflow channel (18) a restoring spring (40') for the sleeve (22') is arranged which is preferably arranged on a guide (41') which is connected in the shape of a star via webs (29') to a part fixed with the housing.

11. Valve according to one of Claims 1 to 9, characterised in that a restoring spring (40) for the sleeve (22) is arranged on the circumference of the sleeve.

12. Valve according to one of the preceding claims, characterised in that the sleeve and its actuating device are constructed as a subassembly.

13. Valve according to one of the preceding claims, characterised in that skirts are attached to the sleeve to modify the flow.

14. Valve according to one of the preceding claims, characterised in that control of the valve ensues by means of a pulse-width modulated voltage.

15. Use of a valve according to one of Claims 1 to 14 for regulating the volume of recirculated exhaust gas of an internal combustion engine which flows from an inflow channel into a throughflow channel, wherein by means of axial displacement of the sleeve through which incoming air flows at least one annular gap for feeding exhaust gases into the throughflow channel is opened or closed.

## Revendications

1. Soupape de recirculation de gaz d'échappement comportant :
- une admission (14),
- une évacuation (16),
- au moins un siège de soupape (24),
- un corps de soupape, constitué d'une douille (22, 22') déplaçable axialement, susceptible d'être appliquée contre le siège de soupape (24) et sur lequel est prévu au moins un induit magnétique (28) d'un aimant de réglage, et
- un dispositif de réglage pour déplacer le corps de soupape,
- l'admission (14) débouchant au moins par tronçon sur le côté extérieur de la douille (22, 22') dans la zone du siège de soupape (24),
et où
la douille (22, 22') mobile se déplace dans un canal de passage d'écoulement (18) qui établit la liaison entre une autre admission (20) et l'évacuation (16), et en ce qu'un enroulement de bobine (32) est disposé dans le canal de passage d'écoulement (18).

2. Soupape selon la revendication 1, caractérisée en ce que l'admission (14) débouche dans un canal d'arrivée d'écoulement (26, 26') qui entoure au moins partiellement la douille (22, 22'), le contour du canal d'arrivée d'écoulement (26, 26') suivant le contour de la douille (22) .

3. Soupape selon la revendication 2, caractérisée en ce que le canal d'arrivée d'écoulement (26, 26') entoure en forme d'anneau la douille (22, 22').

4. Soupape selon la revendication 2 ou 3, caractérisée en ce que le canal d'arrivée d'écoulement (26') est disposé excentriquement par rapport à l'axe du canal de passage d'écoulement (18).

5. Soupape selon la revendication 2 ou 3, caractérisée en ce que le canal d'arrivée d'écoulement (26) est disposé concentriquement par rapport à l'axe du canal de passage d'écoulement (18).

6. Soupape selon au moins l'une des revendications précédentes, caractérisée en ce que l'induit magnétique (28) est formé d'un seul tenant sur la douille (22).

7. Soupape selon au moins l'une des revendications précédentes, caractérisée en ce qu'un carter adapté à la forme de l'écoulement, dans lequel se trouve l'induit magnétique (28) et l'enroulement de bobine (32), est disposé dans le canal de passage d'écoulement (18).

8. Soupape selon l'une des revendications précédentes, caractérisée en ce qu'un capteur de position est prévu pour appréhender la course de la soupape.

9. Soupape selon la revendication 8, caractérisée en ce que le capteur de position est un capteur inductif.

10. Soupape selon l'une des revendications 1 à 9 précédentes, caractérisée en ce qu'au centre du canal de passage d'écoulement (18) est disposé un ressort de rappel (40') destiné à la douille (22'), qui, de préférence, est disposé sur un guidage (41') relié, en forme d'étoile, par des nervures (29') à une partie fixée au carter.

11. Soupape selon l'une des revendications 1 à 9, caractérisée en ce qu'un ressort de rappel (40), destiné à la douille (22), est disposé sur la périphérie de cette douille.

12. Soupape selon l'une des revendications précédentes, caractérisée en ce que la douille et son dispositif de réglage sont réalisées sous la forme d'un composant.

13. Soupape selon l'une des revendications précédentes, caractérisée en ce que des jupes sont montées sur la douille pour influer sur l'écoulement.

14. Soupape selon l'une des revendications précédentes, caractérisée en ce que la commande de la soupape s'effectue à l'aide d'une tension à modulation de largeur d'impulsion.

15. Utilisation d'une soupape selon l'une des revendications 1 à 14, pour la régulation de débit de la quantité de gaz d'échappement recyclée d'un moteur à combustion interne, s'écoulant depuis un canal d'arrivée d'écoulement dans un canal de passage d'écoulement, au moins un intervalle annulaire, prévu pour l'amenée des gaz d'échappement dans le canal de passage d'écoulement, étant ouvert(s) ou fermé(s), par un déplacement axial de la douille traversée par l'écoulement de l'air d'arrivée.
